# EUROPEAN PATENT APPLICATION

(11) **EP 4 459 828 A1**
(43) Date of publication of application: **06.11.2024**
(21) Application number: 24158198.2
(22) Date of filing: 16.02.2024
(51) Int. Cl.: H02J 7/00, H02J 7/34

(54) **BATTERY SYSTEM AND ELECTRONIC DEVICE INCLUDING THE SAME**

(30) Priority: 11.04.2023 KR 20230047668
(71) Applicant: Samsung SDI Co., Ltd., Yongin-si, Gyeonggi-do 17084 (KR)
(72) Inventor: SEO, Youngdong, 17084 Yongin-si (KR); PARK, Jong Sam, 17084 Yongin-si (KR); AHN, Moonsan, 17084 Yongin-si (KR); PARK, Songyi, 17084 Yongin-si (KR)
(74) Representative: Marks & Clerk LLP

(57) **Abstract**

A battery system having a plurality of first terminals and a plurality of battery packs connected in parallel between the plurality of first terminals, wherein each of the plurality of battery packs includes a battery module connected between the plurality of first terminals, a first switch on a discharging path between the battery module and one of the first terminals, a second switch on the discharging path that allows or blocks a current flow in the discharging path, and a first controller. If a control signal indicating a turned-on state of the first switch is received from an electronic device equipped with the battery system while the second switch is turned on, the first controller may control the turning of the first switch on/off based on a voltage difference between a first voltage at a first node between the battery module and the first switch and a second voltage at a second node between the second switch and the first terminal.

## Description

### BACKGROUND

### 1. Field

The present disclosure relates to a battery system and an electronic device including the battery system.

### 2. Description of the Related Art

Unlike a primary, or single-use, battery that provides for only the non-reversible conversion of chemical material into electrical energy, a secondary, or rechargeable, battery can repeat charging and discharging. A low-capacity secondary battery may be used as a power supply for small electronic devices such as portable phones, laptop computers, and camcorders, and a high-capacity secondary battery may be used as a power supply for hybrid vehicles.

In general, a secondary battery cell includes an electrode assembly that includes a positive electrode, a negative electrode, and a separator interposed between the positive electrode and the negative electrode, a case accommodating the electrode assembly, and an electrode terminal electrically connected to the electrode assembly. An electrolyte solution is injected into the case to enable charging and discharging of the battery cell through the electrochemical reaction of the positive electrode, the negative electrode, and the electrolyte solution. The shape of the case, such as a cylindrical or rectangular shape, depends on the purpose of the battery cell.

Battery cells are connected in series and/or in parallel to each other to form a battery module, and the battery module is combined with a charge and discharge circuit, a protection circuit, and the like to form a battery pack. Battery packs are sometimes connected in parallel with each other to increase storage capacity. Meanwhile, if battery packs having different voltages are coupled in parallel, an inrush current may occur at the moment of connection. The inrush current may damage the battery cell and the protection circuit inside the battery pack, and thus a method to prevent the inrush current is required if connecting battery packs in parallel.

### SUMMARY

Embodiments are directed to a battery system and an electronic device including a battery system.

Embodiments are directed to a battery system that prevents an inrush current from occurring based on a voltage difference between battery packs, if the battery packs are connected in parallel, and an electronic device including the same.

A battery system according to embodiments may include a plurality of first terminals and a plurality of battery packs connected in parallel between the plurality of first terminals, wherein each of the plurality of battery packs includes a battery module that may be connected between the plurality of first terminals, a first switch that may be on a discharging path between the battery module and any one of the plurality of first terminals, a second switch that may be on the discharging path and configured to allow or block a current flow in the discharging path, and a first controller, wherein the first switch may include a first field effect transistor (FET) connected between the battery module and the second switch on the discharging path, and a first body diode that may be connected between both ends of the first FET, the first switch may be configured to: transmit a discharge current of the battery module to the discharging path through a source-drain path of the first FET if turned on (i.e. conditional on the switch being in an "on" state), and transmit the discharge current of the battery module to the discharging path through the first body diode if turned off (i.e. conditional on the switch being in an "off' state), and the first controller may be configured such that if (i.e. conditional on) a control signal indicating a turned-on state of the first switch is received from an electronic device equipped with the battery system while the second switch is turned on, the first controller controls the turn-on/off of the first switch based on a voltage difference between a first voltage measured at a first node between the battery module and the first switch and a second voltage measured at a second node between the second switch and the first terminal. In general, in the following description, behavior occurring "if' a given switch is turned on or off may be interpreted as said behavior being conditional on, or responsive to, the described on/off state of the given switch.

In embodiments, the plurality of first terminals may be connected with a load that includes a second controller of the electronic device by an operation switch of the electronic device, and the first controller may maintain the first switch and the second switch to be in an off state if the operation switch is in a turned-off state, and may turn on the second switch if the operation switch is turned on.

In embodiments, if the second switch is turned on as the operation switch is turned on (i.e. such that both switches are turned on), a current for waking up the second controller may be supplied to the second controller from the battery module through the first body diode and the second switch.

In embodiments, the first controller may be configured to receive the control signal from the woken-up second controller.

In embodiments, the second switch may include a second FET connected between the first switch and any one of the first terminals on the discharging path and a second body diode connected between opposite ends of the second FET, and the second switch may transmit a discharge current of the battery module to the one of the first terminal through a drain-source path of the second FET if turned on, and may block the transmission of the discharge current of the battery module to the one first terminal if turned off.

In embodiments, if the first switch is turned off, the current inflow from the one of the first terminals to the battery module may be blocked by the first switch.

In embodiments, the first controller may be further configured to control the first switch to be in an on state if a voltage difference between the second voltage and the first voltage is less than a predetermined value.

In embodiments, the first controller may be further configured to maintain the first switch to be in an off state if the second voltage is higher than the first voltage by the predetermined value.

In embodiments, the first controller may be configured to maintain the first switch in an off state until the voltage difference between the second voltage and the first voltage is less than the predetermined value, and control the first switch to be in an on state if the voltage difference between the second voltage and the first voltage is less than the predetermined value.

In embodiments, the battery system may further include a plurality of second terminals, wherein the plurality of battery packs may be connected in parallel with each other between the plurality of second terminals, each of the plurality of battery packs may further include a third switch on a charging path between the battery module and any one of the plurality of second terminals, and the third switch may be configured to transmit a charge current input through the plurality of second terminals to the battery module if turned on, and block a current flow in the charging path if turned off.

Embodiments are also directed to an electronic device, having a battery system that may include a plurality of first terminals and a plurality of battery packs connected in parallel between the plurality of first terminals, wherein each of the plurality of battery packs includes a battery module that may be connected between the plurality of first terminals, a first switch that may be on a discharging path between the battery module and any one of the plurality of first terminals, a second switch that may be on the discharging path and configured to allow or block a current flow in the discharging path, and a first controller, wherein the first switch may include a first field effect transistor (FET) connected between the battery module and the second switch on the discharging path, and a first body diode that may be connected between both ends of the first FET, the first switch may be configured to: transmit a discharge current of the battery module to the discharging path through a source-drain path of the first FET if turned on, and transmit the discharge current of the battery module to the discharging path through the first body diode if turned off, and the first controller may be configured such that if a control signal indicating a turned-on state of the first switch is received from an electronic device equipped with the battery system while the second switch is turned on, the first controller controls the turn-on/off of the first switch based on a voltage difference between a first voltage measured at a first node between the battery module and the first switch and a second voltage measured at a second node between the second switch and the first terminal.

In embodiments directed to an electronic device, the plurality of first terminals may be connected with a load that includes a second controller of the electronic device by an operation switch of the electronic device, and the first controller may maintain the first switch and the second switch to be in an off state if the operation switch is in a turned-off state, and may turn on the second switch if the operation switch is turned on.

In embodiments directed to an electronic device, the operation switch may be connected between the battery system and the load.

According to the present disclosure, although the battery packs having a large voltage difference are connected in parallel to each other, inrush current can be prevented from flowing between the battery packs. At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1 is a schematic, block diagram illustrating an electronic device according to an embodiment;
FIG. 2 is a schematic circuit diagram illustrating a battery system according to an embodiment; and
FIG. 3 is a flowchart diagram illustrating a control method of a battery system according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art. Like reference numerals refer to like elements throughout.

In this document, the term "and/or" includes all combinations or any combination of the plurality of items listed in relation thereto. The use of "may" if describing embodiments of the present disclosure means "one or more embodiments of the present disclosure." In the following description of an embodiment, singular terms may include plural forms unless the context clearly dictates otherwise.

In this document, terms including ordinal numbers such as "first," "second," and "third" are used to describe various components, but these components are not limited by these terms. The terms are only used to differentiate one component from other components. For example, without departing from the scope of rights described in this document, a first component may be referred to as a second component, and similarly, the second component may also be renamed as the first component.

In this document, in the case where one element or layer is described as "on," "connected," or "coupled" to another element or layer, the expressions "on," "connected," and "coupled" include all the elements formed directly or through one or more other elements or layers. In addition, it should be understood that if one element or layer is described as being "between" two element or layers, it may be the only element or layer between the two elements or layers, or there may be another element or layer intervening one or more.

In this document, the expression "electrically connecting" two elements may include not only a case of directly connecting two elements, but also a case of connecting two elements via another element. Other elements may include switches, resistors, capacitors, and the like. In description of the embodiments, the expression "connect" means electrically connected if there is no direct connection expression.

Hereinafter, a battery system according to an embodiment and an electronic device including the same will be described in detail with reference to necessary drawings.

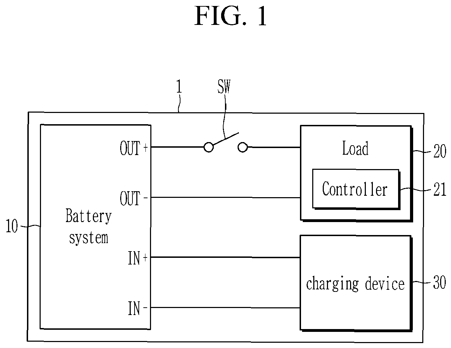

FIG. 1 is a schematic, block diagram illustrating an electronic device according to an embodiment.

Referring to FIG. 1, an electronic device 1 according to an embodiment may include a battery system 10, a load 20, a charging device 30, and an operation switch SW.

The battery system 10 is connected with the load 20 of the electronic device 1 through discharging terminals OUT+ and OUT-, and may supply driving power to the load 20. The load 20 may include a controller 21 controlling the overall operation of the electronic device 1, and devices receiving power from a battery system 10 such as a motor (not shown) and the like.

The battery system 10 is connected to the charging device 30 through charging terminals IN+ and IN- and may receive charging power from the charging device 30. If the electronic device 1 is connected with an external power source, the charging device 30 may charge the battery system 10 using power supplied from the external power source. Meanwhile, in FIG. 1, the case where the charging device 30 is integrated inside the electronic device 1 is shown as an example, but an embodiment is not limited thereto. In another embodiment, the charging device 30 may be implemented as a separate device outside the electronic device 1. In this case, the battery system 10 may be connected to a charging device outside the electronic device 1 through the charging terminals IN+ and IN-.

The operation switch SW is connected between the battery system 10 and the load 20, and may allow or block a current flow between the battery system 10 and the load 20. The operation switch SW may be turned on/off by user manipulation or input.

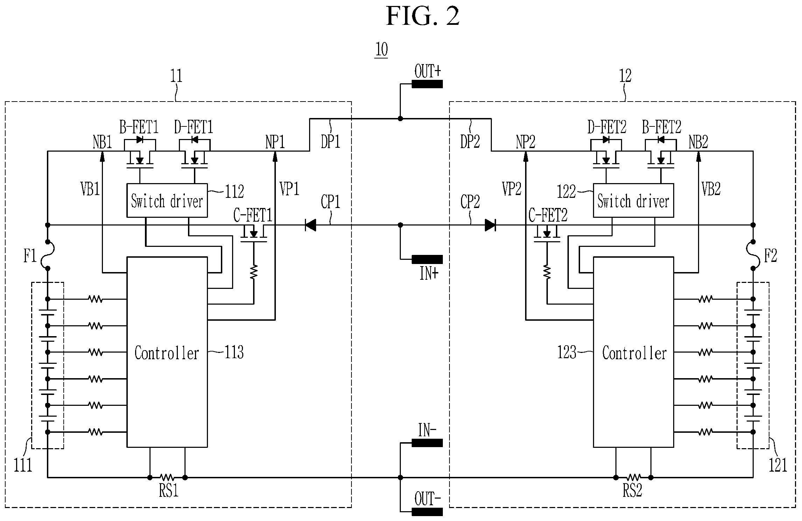

FIG. 2 is a schematic circuit diagram illustrating a battery system according to an embodiment.

Referring to FIG. 2, the battery system 10 according to an embodiment may include a plurality of terminals for charging and discharging IN+, IN-, OUT+, and OUT-, and a plurality of battery packs 11 and 12 coupled in parallel between the terminals.

The plurality of battery packs 11 and 12 may respectively include battery modules 111 and 121, switch drivers 112 and 122, controllers 113 and 123, fuses F1 and F2, and a plurality of switches B-FET1, B-FET2, D-FET1, D-FET2, C-FET1, and C-FET2.

The battery modules 111 and 121 may each include a plurality of cells connected in series and/or in parallel to each other. The battery modules 111 and 121 are connected in parallel to each other between charging terminals IN+ and IN-, and may be charged by charging power supplied from the charging device 30 through the charging terminals IN+ and IN-. The battery modules 111 and 121 may be connected in parallel with each other between the discharging terminals OUT+ and OUT-, and may supply power to the load 20 through the discharging terminals OUT+ and OUT-.

The fuses F1 and F2 may be connected to current paths for charging and discharging the battery modules 111 and 121, respectively. For example, in FIG. 2, the fuse F1 may be connected between the positive terminal of the battery module 111 and the charge and discharge control switches B-FET1, D-FET1, and C-FET1. In addition, the fuse F2 may be connected between the positive electrode of the battery module 121 and the switches -FET2, D-FET2, and C-FET2 for controlling charging and discharging. Each of the fuses F1 and F2 is fused if an overcurrent greater than a predetermined value flows through the corresponding current path, thereby blocking the corresponding current path.

The discharge control switches B-FET1, B-FET2, D-FET1, and D-FET2 may be used to control discharge current flow in discharging paths DP1 and DP2. Switches B-FET1 and B-FET2 can also be called block switches, and switches D-FET1 and D-FET2 can also be called discharge switches.

Block switches B-FET1 and B-FET2 may be respectively on discharging paths DP1 and DP2 between the battery modules 111 and 121 and the discharging terminals OUT+ and OUT-. In FIG. 2, for example, the block switch B-FET1 may be connected between the battery module 111 and the discharging switch D-FET1 on the discharging path DP1. In addition, the block switch B-FET2 may be connected between the battery module 121 and the discharging switch D-FET2 on the discharging path DP2.

The block switches B-FET1 and B-FET2 may be respectively formed of field effect transistors (FETs). The block switches B-FET1 and B-FET2 may include a body diode generated inside the FET during the FET manufacturing process. In FIG. 2, diodes connected between opposite ends of the FET that form the block switches B-FET1 and B-FET2 are the body diode. A body diode of the block switch B-FET1 may be formed of an anode connected to the battery module 111 and a cathode connected to the discharging switch D-FET1. A body diode of the block switch B-FET2 may be formed of an anode connected to the battery module 121 and a cathode connected to the discharging switch D-FET2. Correspondingly, the block switches B-FET1 and B-FET2 may transmit a discharge current through a source-drain path of the FET if turned on, and may transmit a discharge current through the body diode even if turned off. The body diode of the FET may have a lower allowable current range than the source-drain path of the FET. Therefore, the block switches B-FET1 and B-FET2 may be controlled to operate in an off state if a low discharge current is required, such as if waking up the controller 21 (hereinafter, referred to as an upper controller 21) of electronic device 1, and to operate in an on state if a high discharge current is required, such as if driving a motor (not shown) for example connected via the discharging terminals OUT+ and OUT-.

The discharging switches D-FET1 and D-FET2 may be respectively on discharging paths DP1 and DP2 between the battery modules 111 and 121 and the discharging terminals OUT+ and OUT-. For example, in FIG. 2, discharging switch D-FET1 may be connected between the block switch B-FET1 and the discharge terminal OUT+ on the discharging path DP1. In addition, the discharging switch D-FET2 may be connected between the block switch B-FET2 and the discharge terminal OUT+ on the discharging path DP2.

Each of the discharging switches D-FET1 and D-FET2 may be formed of a FET. The discharging switches D-FET1 and D-FET2 may include body diodes generated inside the FET during the FET manufacturing process. In FIG. 2, a diode connected between opposite ends of the FET forming the discharging switches D-FET1 and D-FET2 is a body diode. The body diode of the discharging switch D-FET1 may be formed of an anode connected to the discharging terminal OUT+ and a cathode connected to the block switch B-FET1. The body diode of the discharging switch D-FET2 may be formed of an anode connected to the discharging terminal OUT+ and a cathode connected to the block switch B-FET2. The discharging switches D-FET1 and D-FET2 may transmit a current through a drain-source path of the FET if turned on, and may block the current flow of the discharging paths DP1 and DP2 if turned off. Therefore, the discharging switches D-FET1 and D-FET2 may be controlled to operate in an off state if the flow of discharge current in the corresponding discharging paths DP1 and DP2 is to be blocked, and to operate in an on state if the flow of the discharge current in the corresponding discharging paths DP1 and DP2 is to be allowed.

An on/off status of the block switches B-FET1 and B-FET2 and the discharging switches D-FET1 and D-FET2 may be controlled by corresponding switch drivers 112 and 122. The switch drivers 112 and 122 may receive a control signal instructing an on/off status of the block switches B-FET1 and B-FET2 and/or discharging switches D-FET1 and D-FET2 from corresponding controllers 113 and 123, and control on/off of the block switches B-FET1 and B-FET2 and/or discharging switches D-FET1 and D-FET2 in response thereto.

Charge switches C-FET1 and C-FET2 may be used to control the charge current flow of charging paths CP1 and CP2.

The charging switches C-FET1 and C-FET2 may be on the charging paths CP1 and CP2 between the battery modules 111 and 121 and charging terminals IN+ and IN-, respectively. For example, in FIG. 2, the charging switch C-FET1 may be connected between the battery module 111 and the charging terminal IN+ on the charging path CP1. In addition, the charging switch C-FET2 may be connected between the battery module 121 and the charge terminal IN+ on the charging path CP2.

Each of the charge switches C-FET1 and C-FET2 may be formed of a FET. The charging switches C-FET1 and C-FET2 may transmit a charge current through a source-drain path of the FET if turned on, and may block the current flow of the charging paths CP1 and CP2 if turned off. Therefore, the charging switches C-FET1 and C-FET2 may be controlled to operate in an off state if it is desired to block the current flow in the corresponding charging paths CP1 and CP2, and in an on state if it is desired to allow the current flow in the corresponding charging paths CP1 and CP2.

The turning on/off of the charging switches C-FET1 and C-FET2 may be controlled by the corresponding controllers 113 and 123.

The controllers 113 and 123 may monitor states of the corresponding battery packs 10 and 11 and the electronic device 1, and control overall operation of the corresponding battery packs 10 and 11 based on the monitoring result.

The controllers 113 and 123 may detect states (e.g., temperature, voltage, current, and like parameters) of the corresponding battery packs 11 and 12.

The controllers 113 and 123 may detect cell voltages of battery cells that form the corresponding battery packs 11 and 12. The controllers 113 and 123 may also detect module voltages of the battery modules 111 and 121 that form the corresponding battery packs 11 and 12. The controllers 113 and 123 may detect a voltage at a front end and a voltage at a rear end of the discharge control switches B-FET1, B-FET2, D-FET1, and D-FET2 in each of the discharging paths DP1 and DP2. For example, in FIG. 2, the controller 113 may detect a voltage VB1 at a node NB1 positioned at the front end of the discharge control switches B-FET1 and D-FET1 on the discharging path DP1 (i.e. between the block switch B-FET1 and the battery module 111) and a voltage VP1 at a node NP1 positioned at the rear end of the of the discharge control switches B-FET1 and D-FET1 on the discharging path DP1 (i.e. between the discharging switch D-FET1 and the discharging terminal OUT+). In addition, the controller 123 may detect a voltage VB2 at a node NB2 positioned at the front end of the discharge control switches B-FET2 and D-FET2 on the discharging path DP2 (i.e. between the block switch B-FET2 and the battery module 121) and a voltage VP2 at a node NP2 positioned at the rear end of the discharge control switches B-FET2 and D-FET2 on the discharging path DP2 (i.e. between the discharging switch D-FET2 and the discharging terminal OUT+).

The controllers 113 and 123 may detect charging and discharge currents of the corresponding battery packs 11 and 12. For example, in FIG. 2, the controller 113 may detect a voltage at both ends of a shunt resistor RS1 positioned on the charging and discharge current path of the battery pack 11, and may detect the charging and discharge current of the battery pack 11 therefrom. In addition, the controller 123 may detect a voltage at both ends of the shunt resistor RS2 positioned on the charging and discharge current path of the battery pack 12, and may detect the charging and discharge current of the battery pack 12 therefrom.

The controllers 113 and 123 may detect a state of the electronic device 1 in which the battery system 10 is mounted. For example, the controllers 113 and 123 may detect a power on/power off status of the electronic device 1 equipped with the battery system 10, an on/off status of the switch SW, connection of an external power, and the like.

The controllers 113 and 123 may communicate with their upper controller 21, respectively. For example, the controllers 113 and 123 may transmit status information (voltage, current, temperature, and like parameters) of the corresponding battery packs 11 and 12 to the upper controller 21, respectively. In addition, for example, the controllers 113 and 123 may respectively receive a signal that indicates the start of charging or discharging of the corresponding battery packs 11 and 12 from the upper controller 21.

In addition, for example, the controllers 113 and 123 may receive signals that indicate, or instruct, a turning on/off of the charge and discharge control switches B-FET1, B-FET2, D-FET1, D-FET2, C-FET1, and C-FET2 from the upper controller 21.

The controllers 113 and 123 may control the overall operation of the battery system 10 by performing the charge and discharge of the corresponding battery packs 11 and 12, a balancing function, and a protection functions (i.e., a protection function against an overcurrent, an overvoltage, a low voltage (or over-discharge), an over-temperature, short circuit, and like anomalies).

The controllers 113 and 123 may control the turning on/off of the corresponding charge and discharge control switches B-FET1, B-FET2, D-FET1, D-FET2, C-FET1, and C-FET2 based on the state of the electronic device 1 in which the battery system 10 is mounted, a control signal received from the upper controller 21, and state information of the corresponding battery packs 11 and 12.

If the operation switch SW of the electronic device 1 is turned off and the charging device 30 is not connected to an external power source for charging, the controllers 113 and 123 may maintain all charge and discharge control switches B-FET1, B-FET2, D-FET1, D-FET2, C-FET1, and C-FET2 in the turned off state. If the external power source for charging is connected to the charging device 30 while the operation switch SW of electronic device 1 is turned off, the controllers 113 and 123 may turn on the charge switches C-FET1 and C-FET2 to charge the corresponding battery packs 11 and 12, and maintain the discharge control switches B-FET1, B-FET2, D-FET1, and D-FET2 in the turned off state. Then, if the connection between the charging device 30 and the external power supply for charging is disconnected, the controllers 113 and 123 may control the charging switches C-FET1 and C-FET2 to be turned off again.

If the operation switch SW is turned on, the controllers 113 and 123 may control only the discharging switches D-FET1 and D-FET2 among the discharge control switches B-FET1, B-FET2, D-FET1, and D-FET2 to be turned on first. As the discharging switches D-FET1 and D-FET2 are turned on, power can be supplied from the battery modules 111 and 121 to the load 20 through the body diodes of the block switches B-FET1 and B-FET2 and the discharging switches D-FET1 and D-FET2. Therefore, the upper controller 21 may be woken up by the power supplied from the battery modules 111 and 121. Since the wake-up function of the upper controller 21 has low current consumption, it can be sufficiently performed with the supplied discharge current while the block switches B-FET1 and B-FET2 are turned off and only the discharging switches D-FET1 and D-FET2 are turned on. Meanwhile, in a state in which the block switches B-FET1 and B-FET2 are turned off and only the discharging switches D-FET1 and D-FET2 are turned on, the current inflow to the battery modules 111 and 121 through the discharging paths DP1 and DP2 may be blocked. Therefore, in this state, even though the voltages of the battery modules 111 and 121 are different, the flow of inrush current between the battery modules 111 and 121 may be blocked.

If the upper controller 21 wakes up, it may transmit a control signal for additionally turning on at least one of the block switches B-FET1 and B-FET2 to the controllers 113 and 123. The woken-up upper controller 21 may receive state information of each of the battery packs 11 and 12 from each of the controllers 113 and 123 and obtain a voltage difference between the module voltages of the two battery packs 11 and 12 based on the received state information. Then, if the module voltage difference between the two battery packs 11 and 12 is less than a predetermined value, the upper controller 21 may transmit a control signal instructing that all of the block switches B-FET1 and B-FET2 and discharging switches D-FET1 and D-FET2 of the two battery packs 11 and 12 be controlled to be in a turn-on state to each of the controllers 113 and 123. On the other hand, the upper controller 21 may transmit a control signal to the controllers 113 and 123 to preferentially discharge only a battery pack having a higher module voltage among the two battery packs 11 and 12 if the difference in module voltage between the two battery packs 11 and 12 is greater than the predetermined value. That is, the upper controller 21 may transmit a control signal instructing that only the block switch of the battery pack having a higher module voltage among the block switches B-FET1 and B-FET2 be additionally turned on, to the controller of the corresponding battery pack. Thereafter, if it is determined that the difference in module voltage between the two battery packs 11 and 12 has decreased to less than a predetermined value based on the state information received from each of the controllers 113 and 123, the upper controller 21 may transmit a control signal that instructs the block switches of the remaining battery packs to be turned on as well to the controller of the corresponding battery pack.

Meanwhile, in a state where the module voltage difference between the two battery packs 11 and 12 is large, a communication error, malfunction of the upper controller 21, and the like may occur such that the upper controller 21 may transmit a control signal to the controllers 113 and 123 to instruct both the block switches B-FET1 and B-FET2 of the two battery packs 11 and 12 to be turned on. If both the block switches B-FET1 and B-FET2 and the discharging switches D-FET1 and D-FET2 are turned on when the module voltage difference between the two battery packs 11 and 12 is large, an inrush current flows between the two battery packs 11 and 12, which may cause a safety problem that damages the battery packs 11 and 12.

To solve this problem, the controllers 113 and 123 periodically check the voltages VB1 and VB2 at the nodes NB1 and NB2 between the discharge control switches B-FET1, B-FET2, D-FET1, and D-FET2 and the battery modules 111 and 121, and the voltages VP1 and VP2 at the nodes NP1 and NP2 between the discharge control switches B-FET1, B-FET2, D-FET1, and D-FET2 and the discharge terminal OUT+. In addition, if a control signal instructing to control all the discharge control switches B-FET1, B-FET2, D-FET1, and D-FET2 from the upper controller 21 is received, the controllers 113 and 123 compare the voltages VB1 and VB2 at the nodes NB1 and NB2 with the voltages VP1 and VP2 at the nodes NP1 and NP2, and control the turn-on/off of the discharge control switches B-FET1, B-FET2, D-FET1, and D-FET2 according to the comparison result.

For example, if a voltage difference between the voltage VP1 at the node NP1 and the voltage VB1 at the node NB1 is less than a predetermined value, the controller 113 may control the block switch B-FET1 to be in an on state. Since the discharging switch D-FET1 is maintained in the turned-on state as the operation switch SW is turned on, power can be supplied from the battery module 111 to the load 20 through the discharging path DP1 if the block switch B-FET1 is additionally turned on. On the other hand, if the voltage VP1 at the node NP1 is higher than the voltage VB1 at the node NB1 by a predetermined value or more, the controller 113 determines that the voltage of the battery module 121 is higher than the voltage of the battery module 111 by a predetermined value or more, and maintains the block switch B-FET1 in the turned-off state to prevent inflow of the inrush current to the battery pack 11. Therefore, a state in which the current flow is blocked in the discharging path DP1 from the battery module 111 to the load 20 may be maintained. On the other hand, the controller 123 controls the block switch B-FET2 to be in a turned-on state such that power can be supplied from the battery module 121 to the load 20 through the discharging path DP2. Then, if the voltage difference between the voltage VP1 at the node NP1 and the voltage VB1 at the node NB1 decreases to less than a predetermined value due to the discharge of the battery module 121, the controller 113 may control the block switch B-FET1 to be turned on. Accordingly, power may be supplied to the load 20 from both battery packs 11 and 12.

In addition, for example, the controller 123 may control the block switch B-FET2 to be in an on state if a voltage difference between the voltage VP2 at the node NP2 and the voltage VB2 at the node NB2 is less than a predetermined value. Since the discharging switch D-FET2 is already maintained in the turned-on state as the operation switch SW turns on, if the block switch B-FET2 is additionally turned on, power can be supplied from the battery module 121 to the load 20 through the discharging path DP2. On the other hand, if the voltage VP2 at the node NP2 is higher than the voltage VB2 at the node NB2 by a predetermined value or more, the controller 123 determines that the voltage of the battery module 111 is higher than the voltage of the battery module 121 by a predetermined value or more, and maintains the block switch B-FET2 in the turned-off state to prevent inflow of the inrush current to the battery pack 12. Therefore, a state in which the current flow is blocked in the discharging path DP2 from the battery module 121 to the load 20 may be maintained. Meanwhile, the controller 113 controls the block switch B-FET1 to be in a turned-on on state such that power can be supplied from the battery module 111 to the load 20 through the discharging path DP1. Then, if the voltage difference between the voltage VP2 at the node NP2 and the voltage VB2 at the node NB2 decreases to less than a predetermined value due to the discharge of the battery module 111, the controller 123 may control the block switch B-FET2 to be turned on. Accordingly, power can be supplied to the load 20 from both battery packs 11 and 12.

The controllers 113 and 123 may control all discharge control switches B-FET1, B-FET2, D-FET1, and D-FET2 to be in the turned-off state and wait if the operation switch SW is turned off during the discharge of the battery packs 11 and 12.

The controllers 113 and 123 are formed of at least one processor and may be integrated into a battery management system (BMS) of each of the battery packs 11 and 12.

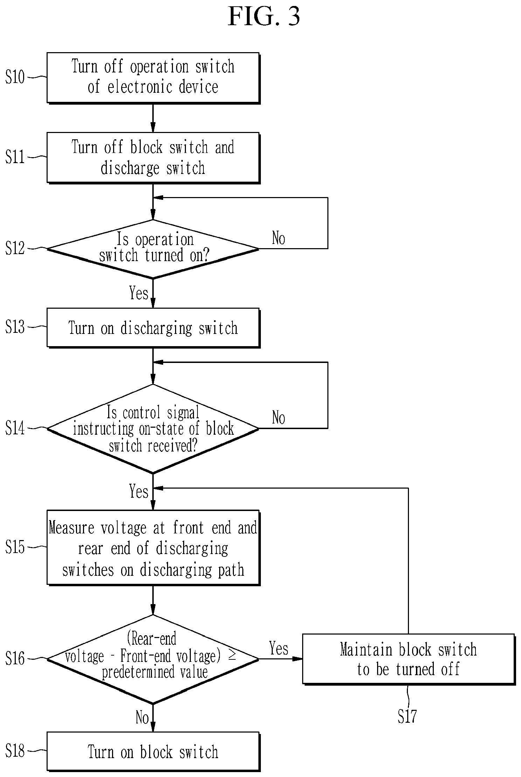

Hereinafter, referring to FIG. 3, a control method of the battery system 10 according to an embodiment will be described.

FIG. 3 is a flowchart diagram illustrating a control method of a battery system according to an embodiment. A method shown in FIG. 3 may be conducted by the controllers 113 and 123 respectively described with reference to FIG. 1 and FIG. 2.

In a state that the operation switch SW of the electronic device 1 is turned off (S10), the controllers 113 and 123 turn off (S11) the block switches B-FET1 and B-FET2 and the discharging switches D-FET1 and D-FET2 of the corresponding battery packs 11 and 12 and wait.

Then, if the operation switch SW is turned on (S12), the respective controllers 113 and 123 may control only the discharging switches D-FET1 and D-FET2 to be turned on first (S13). As the discharging switches D-FET1 and D-FET2 are turned on, power is supplied to the load 20 from the battery modules 111 and 121 through the body diodes of the block switches B-FET1 and B-FET2 and the discharging switches D-FET1 and D-FET2, and accordingly, the upper controller 21 can wake up.

Thereafter, each of the controllers 113 and 123 may wait to receive a control signal for additionally turning on the block switches B-FET1 and B-FET2 from the upper controller 21 that has been woken up (S14).

If a control signal for turning on the block switches B-FET1 and B-FET2 is received from the upper controller 21, each of the controllers 113 and 123 may measure the voltage at the front and rear ends of the corresponding discharge control switches B-FET1, B-FET2, D-FET1, and D-FET2 (S15). That is, the respective controllers 113 and 123 may measure the voltages VB1 and VB2 at the nodes NB1 and NB2 between the discharge control switches B-FET1, B-FET2, D-FET1, and D-FET2 and the battery modules 111 and 121 and the voltages VP1 and VP2 at the nodes NP1 and NP2 between the discharge control switches B-FET1, B-FET2, D-FET1, and D-FET2 and the discharge terminal OUT+ in the battery packs 11 and 12. Then, each of the controllers 113 and 123 compares the rear-end voltages VP1 and VP2 with the front-end voltages VB1 and VB2 measured in the battery packs 11 and 12 to determine whether the rear-end voltages VP1 and VP2 are higher than the front-end voltages VB1 and VB2 by a predetermined value or more (S16).

If the voltage difference between the rear-end voltages VP1 and VP2 and the front-end voltages VB1 and VB2 measured in the battery packs 11 and 12 is less than the predetermined value, each of the controllers 113 and 123 may control the corresponding block switches B-FET1 and B-FET2 to be turned on (S18). The discharging switches D-FET1 and D-FET2 of the battery packs 11 and 12 are already turned on through the step S13. Therefore, if the block switches B-FET1 and B-FET2 are additionally turned on, the corresponding battery packs 11 and 12 may supply driving power to the load 20 through the block switches B-FET1 and B-FET2 and discharging switches D-FET1 and D-FET2 that are in an on state.

Meanwhile, if the voltage difference between the rear-end voltages VP1 and VP2 and the front-end voltages VB1 and VB2 measured in the battery packs 11 and 12 is higher than the predetermined value, each of the controllers 113 and 123 may maintain the corresponding block switches B-FET1 and B-FET2 in an off state in order to prevent inflow of inrush current to the battery packs 11 and 12 (S17). In the battery system 10 in which the two battery packs 11 and 12 are connected in parallel, an output voltage of a battery pack having a higher module voltage among the two battery packs 11 and 12 is output to the discharge terminal OUT+ of the battery system 10. Therefore, if the rear-end voltages VP1 and VP2 measured in any one of the two battery packs 11 and 12 are higher than the front-end voltages VB1 and VB2 by a predetermined value or more, it means that the output voltage of the other battery pack is being applied to the discharge terminal OUT+. Accordingly, although a block switch is maintained in an off state in one of the two battery packs 11 and 12, a block switch in the other battery pack is controlled to be in an on state, and power can be supplied to the load 20.

After maintaining the block switch in an off position, each of the controllers 113 and 123 continuously measures the rear-end voltages VP1 and VP2, and the front-end voltages VB1 and VB2 in their battery packs 11 and 12 (S15), if the voltage difference between the measured rear-end voltages VP1 and VP2 and the front-end voltages VB1 and VB2 decreases to less than a predetermined value (S16), the controllers 113 and 123 may control the corresponding block switches B-FET1 and B-FET2 to be turned on (S18). Accordingly, the block switches B-FET1 and B-FET2 are turned on in both battery packs 11 and 12, and power can be supplied to the load 20 by both battery packs 11 and 12.

An electronic or electrical device and/or any other related device or element according to embodiments of the present disclosure described herein may be implemented using any suitable hardware, firmware (e.g., application-specific integrated circuit), software, or a combination of software, firmware, and hardware. For example, the various configurations of these devices may be built on one integrated circuit (IC) chip or on separate IC chips. In addition, various configurations elements of these devices can be implemented on a flexible printed circuit film, a tape carrier package (TCP), a printed circuit board (PCB), or one substrate. An electrical connection or interconnection described in this specification may be implemented by wire or conductive elements on, for example, a PCB or other type of circuit carrier. The conductive element may include, for example, metallization such as surface metallizations, and/or pins, and may include conductive polymers or ceramics.

Additionally, the various configurations of these devices may be processes or threads that run on one or more processors, run within one or more computing devices, execute computer program instructions, and interact with other system elements to perform the various functions described herein. Computer program instructions may be stored in a memory, which may be implemented in a computing device using standard memory devices, such as, for example, random access memory (RAM). Computer program instructions may also be stored on other non-transitory computer readable media, such as, for example, a CD-ROM, flash drive, or the like.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### <Description of symbols>

1: electronic device
10: battery system
11, 12: battery pack
111, 121: battery module
112, 122: switch driver
113, 123: controller
20: load
21: upper controller
30: charging device
SW: operation switch
B-FET1, B-FET2: block switch
D-FET1, D-FET2: discharging switch
C-FET1, C-FET2: charging switch
DP1, DP2: discharging path
CP1, CP2: charging path
OUT+, OUT-: discharging terminal
IN+, IN-: charging terminal

## Claims

1. A battery system comprising a plurality of first terminals and a plurality of battery packs connected in parallel between the plurality of first terminals, wherein each of the plurality of battery packs comprises:
a battery module connected between the plurality of first terminals,
a first switch on a discharging path between the battery module and any one of the plurality of first terminals,
a second switch that is on the discharging path and is configured to allow or block a current flow in the discharging path, and
a first controller, wherein
the first switch includes a first field effect transistor (FET) connected between the battery module and the second switch on the discharging path, and a first body diode connected between both ends of the first FET,
the first switch is configured to:
transmit a discharge current of the battery module to the discharging path through a source-drain path of the first FET if turned on, and
transmit the discharge current of the battery module to the discharging path through the first body diode if turned off, and
the first controller is configured such that if a control signal indicating a turned-on state of the first switch is received from an electronic device equipped with the battery system while the second switch is turned on, the first controller controls the turn-on/off of the first switch based on a voltage difference between a first voltage measured at a first node between the battery module and the first switch and a second voltage measured at a second node between the second switch and the first terminal.

2. The battery system as claimed in claim 1, wherein:
the plurality of first terminals is connected with a load that includes a second controller of the electronic device by an operation switch of the electronic device, and
the first controller maintains the first switch and the second switch to be in an off state if the operation switch is in a turned-off state, and turns on the second switch if the operation switch is turned on.

3. The battery system as claimed in claim 2, wherein if the second switch is turned on as the operation switch is turned on, a current for waking up the second controller is supplied to the second controller from the battery module through the first body diode and the second switch.

4. The battery system as claimed in claim 3, wherein the first controller is configured to receive the control signal from the woken-up second controller.

5. The battery system as claimed in any of claims 2 to 4, wherein:
the second switch comprises a second FET connected between the first switch and any one of the first terminals on the discharging path and a second body diode connected between opposite ends of the second FET, and
the second switch transmits a discharge current of the battery module to the one of the first terminals through a drain-source path of the second FET if turned on, and blocks the transmission of the discharge current of the battery module to the one first terminal if turned off.

6. The battery system as claimed in any preceding claim, wherein if the first switch is turned off, the current inflow from the one of the first terminals to the battery module is blocked by the first switch.

7. The battery system as claimed in any preceding claim, wherein the first controller is further configured to control the first switch to be in an on state if a voltage difference between the second voltage and the first voltage is less than a predetermined value.

8. The battery system as claimed in claim 7, wherein the first controller is further configured to maintain the first switch to be in an off state if the second voltage is higher than the first voltage by the predetermined value.

9. The battery system as claimed in claim 8, wherein the first controller is configured to:
maintain the first switch in an off state until the voltage difference between the second voltage and the first voltage is less than the predetermined value, and
control the first switch to be in an on state if the voltage difference between the second voltage and the first voltage is less than the predetermined value.

10. The battery system as claimed in any preceding claim, further comprising a plurality of second terminals, wherein:
the plurality of battery packs is connected in parallel with each other between the plurality of second terminals,
each of the plurality of battery packs further comprises a third switch on a charging path between the battery module and any one of the second terminals, and
the third switch is configured to:
transmit a charge current input through the plurality of second terminals to the battery module if turned on, and
block a current flow in the charging path if turned off.

11. An electronic device, comprising a battery system as claimed in any preceding claim, wherein the operation switch is connected between the battery system and the load.
